# FASCICULE DE BREVET EUROPEEN

(11) **EP 2 939 902 B1**
(45) Date de publication et mention de la délivrance du brevet: **26.12.2018**
(21) Numéro de dépôt: 15163710.5
(22) Date de dépôt: 15.04.2015
(51) Int. Cl.: B61L 25/08, G06K 9/00

(54) **PROCÉDÉ ET DISPOSITIF POUR DÉTERMINER UN ITINÉRAIRE FERROVIAIRE**
VERFAHREN UND VORRICHTUNG ZUR BESTIMMUNG EINER EISENBAHNSTRECKE
METHOD AND DEVICE FOR DETERMINING A RAILWAY ITINERARY

(30) Priorité: 30.04.2014 FR 1453971
(43) Date de publication de la demande: 04.11.2015
(73) Titulaire: SNCF RESEAU, 93418 La Plaine Saint-Denis Cedex (FR)
(72) Inventeur: Houzel, Bertrand, 75013 Paris (FR); Masmoudi, Mariam, 75014 Paris (FR)
(74) Mandataire: IPAZ

(56) Documents cités:
- WO-A1-01/55853
- DE-A1-102006 025 523
- GB-A- 2 323 955
- US-A- 2 133 640

## Description

L'invention concerne un procédé pour déterminer un itinéraire ferroviaire. Elle concerne également un dispositif mettant en oeuvre les étapes d'un tel procédé.

Le domaine de l'invention est le domaine ferroviaire, et plus particulièrement, le domaine de la caractérisation des itinéraires ferroviaires utilisés.

### Etat de la technique

Les trajets d'un véhicule ferroviaire sont signalés sur des tableaux ou des écrans de contrôle indiquant d'une part l'itinéraire du véhicule et d'autre part le segment de l'itinéraire sur lequel le véhicule ferroviaire se trouve à un instant t. Ces tableaux ou écran de contrôle sont commandés par des postes de signalisation.

Les tableaux ou les écrans de contrôle actuellement utilisés sont de différentes technologies. Un nombre important de ces tableaux de contrôle sont d'anciens tableaux de contrôle lumineux ou optiques. Ces derniers réalisent certes un affichage des trajets ferroviaires à un instant t mais ne fournissent pas de données numériques ou analogiques relatives aux trajets ferroviaires exploitables ultérieurement par un autre dispositif ou par un opérateur.

Or, les données de trajets ferroviaires sur une portion de voies ferrées présentent une importance capitale. Ces données permettent par exemple de réaliser des opérations de maintenance des voies ferrées en dérangeant le moins possible les circulations des véhicules ferroviaires. Ces données permettent également d'organiser les trajets ferroviaires pour éviter des accidents liés à la longueur ou au gabarit des véhicules, ou pour harmoniser l'utilisation de voies ferrées pour éviter une dégradation d'une portion de voie ferrée due à une utilisation excessive ou insuffisante. Ces données permettent également de faciliter le remplacement des postes de signalisation, en indiquant les équipements ferroviaires impliqués, et permettent la formation des opérateurs chargés de coordonner et surveiller les circulations ferroviaires.

Il n'existe actuellement aucun procédé ou système permettant d'avoir accès aux données des trajets ferroviaires à partir des tableaux de contrôle lumineux, de manière automatisée.

Le document GB 2 323 955 A divulgue un dispositif de surveillance du tableau l'affichage d'un poste de contrôle ferroviaire qui détermine l'état des éléments affichées mais pas des itinéraires ni le changement de ceux-ci.

L'invention a pour but de pallier cet inconvénient.

Notamment, le but de l'invention est de proposer un procédé et un dispositif pour déterminer, de manière automatisée, les itinéraires ferroviaires à partir d'un tableau de contrôle lumineux.

Un autre but de l'invention est de proposer un procédé et un dispositif pour déterminer, de manière automatisée, les itinéraires ferroviaires à partir d'un tableau de contrôle lumineux de manière rapide et peu coûteuse.

Enfin un autre but de l'invention est de proposer un procédé et un dispositif pour déterminer, de manière automatisée, les itinéraires ferroviaires à partir d'un tableau de contrôle lumineux, utilisable pour tous types de tableau de contrôle.

### Exposé de l'invention

L'invention permet d'atteindre au moins l'un des buts précités par un procédé pour déterminer au moins un itinéraire ferroviaire affiché sur un appareil d'affichage lumineux, ledit procédé comprenant plusieurs itérations d'une phase d'analyse comprenant les étapes suivantes :
- acquisition d'une image, dite actuelle, dudit appareil d'affichage lumineux,
- comparaison de ladite image actuelle avec une image, dite précédente, dudit appareil d'affichage acquise lors d'une itération précédente ; et
- détermination, en fonction de ladite comparaison, d'au moins un itinéraire ferroviaire.

Le procédé selon l'invention permet donc de déterminer un ou des itinéraires ferroviaires à partir d'une analyse d'images de l'appareil d'affichage, également appelé tableau ou écran de contrôle.

Ainsi, il est possible de déterminer, de manière automatisée, les itinéraires ferroviaires affichés sur un tableau de contrôle lumineux, sans interaction physique ou électrique avec le tableau de contrôle, ni le poste de signalisation qui commande le tableau de contrôle. Le procédé selon l'invention permet donc de déterminer des itinéraires sur des tableaux de contrôle optiques d'ancienne génération qui ne fournissent aucune donnée analogique/numérique relative aux itinéraires affichés.

En outre, la détermination des itinéraires ferroviaires affichés sur le tableau de contrôle est basée sur des images du tableau de contrôle, sans connexion électrique/informatique avec le tableau de contrôle. Le procédé selon l'invention permet donc de réaliser une détermination des itinéraires de manière plus simple et plus rapide.

Enfin, selon l'invention, les itinéraires ferroviaires sont déterminés à partir d'un tableau de contrôle lumineux, utilisable pour tous types de tableaux de contrôle lumineux.

L'image actuelle peut ensuite être mémorisée pour être utilisée lors d'une prochaine itération de la phase d'analyse.

Avantageusement, l'étape de comparaison peut fournir une image, dite de différence, dudit appareil d'affichage comprenant les différences entre l'image actuelle et l'image précédente.

Ainsi, le procédé selon l'invention permet de déterminer les itinéraires de manière dynamique au fur et à mesure de leur création, disparition, évolution.

La comparaison entre l'image actuelle et l'image précédente, pour déterminer l'image de différence, peut être une comparaison de type booléen, par exemple un « ET » booléen. Ainsi, lorsqu'un résultat positif est obtenu cela veut dire que les deux images sont identiques, pour le pixel ou la région considérée, et lorsque lorsqu'un résultat négatif est obtenu cela veut dire que les deux images sont différentes.

Avantageusement, le procédé selon l'invention peut en outre comprendre au moins une itération d'une phase, dite d'apprentissage, comprenant les étapes suivantes :
- acquisition d'une image de l'appareil d'affichage,
- analyse de ladite image pour détecter au moins un, en particulier chaque, segment composant au moins un itinéraire ;
ladite phase d'apprentissage fournissant pour au moins un, en particulier chaque, itinéraire une image d'au moins un, en particulier chaque, segment-dudit itinéraire de manière isolée sur l'appareil d'affichage.

Ainsi, le procédé selon l'invention s'adapte à chaque tableau de contrôle de manière individuelle en fonction des trajets ferroviaires qui peuvent être affichés sur ce tableau de contrôle. De plus, le procédé permet, grâce à la phase d'apprentissage, de détecter de manière individuelle tous les segments qui peuvent être utilisés pour composer les trajets ferroviaires affichés sur le tableau de contrôle.

La détection d'un segment d'itinéraire peut être réalisée par détection d'un ou plusieurs voyants d'affichage présents sur le tableau de contrôle et délimitant ce segment, par analyse de l'image du tableau de contrôle.

L'étape de détermination d'au moins un itinéraire peut comprendre une comparaison de l'image de différence avec l'image d'au moins un, en particulier de chaque, segment pour déterminer si l'image de différence comprend ledit segment.

Une telle comparaison permet de déterminer de manière individuelle quels segments de voie ferrée sont utilisés pour former l'itinéraire ferroviaire. En déterminant tous les segments de voie ferrée utilisés, il est possible de déterminer l'itinéraire complet affiché sur le tableau de contrôle.

La comparaison entre l'image de différence et l'image de chaque segment peut être une comparaison de type booléen, par exemple un « ET » booléen. Ainsi, lorsqu'un résultat positif est obtenu cela veut dire que le segment en question est présent sur l'image de différence.

Préférentiellement, selon l'invention, une comparaison de deux images peut être réalisée pixel par pixel.

Par exemple, la comparaison d'une image actuelle avec une image précédente pour déterminer l'image de différence peut être réalisée pixel par pixel, déterminant ainsi l'image de différence pixel par pixel.

D'une manière similaire, la comparaison de l'image de différence avec l'image de chaque segment peut être réalisée pixel par pixel également.

Avantageusement, le procédé selon l'invention peut en outre comprendre une mémorisation d'au moins un itinéraire dans une base de données, éventuellement avec une donnée de temps relatif à l'utilisation de cet itinéraire et éventuellement avec un dispositif ferroviaire impliqué dans l'itinéraire tel qu'un dispositif de signalisation ou un dispositif d'aiguillage, etc.

De telles données d'itinéraires présentent une importance capitale pour :
- la planification et la réalisation d'opérations de maintenance des voies ferrées en dérangeant le moins possible les circulations des véhicules ferroviaires ;
- l'organisation des trajets ferroviaires pour éviter des accidents liés à la longueur ou au gabarit des véhicules, ou pour harmoniser l'utilisation de voies ferrées pour éviter une dégradation d'une portion de voie ferrée due à l'utilisation excessive ou insuffisante ;
- le remplacement des tableaux de contrôle, en indiquant les équipements ferroviaires impliqués ; et
- la formation des opérateurs chargés de coordonner et surveiller les circulations ferroviaires.

Dans cette optique, le procédé selon l'invention peut avantageusement comprendre une analyse, par exemple statistique, des données d'itinéraire mémorisées pour déterminer au moins une caractéristique relative à une utilisation d'un itinéraire, ladite caractéristique comprenant :
- une fréquence d'utilisation dudit itinéraire, éventuellement pour une plage horaire,
- au moins un instant d'utilisation dudit itinéraire,
- au moins un itinéraire adjacent sur au moins une partie dudit itinéraire utilisé au même moment que ledit itinéraire,
- au moins un, en particulier chaque, équipement ferroviaire concerné par ledit itinéraire, et
- au moins un élément de l'itinéraire

Selon l'invention, chaque image du tableau de contrôle peut être traitée par exemple pour améliorer la luminosité de ladite image, ou encore pour améliorer le contraste.

Selon un exemple de réalisation, les images du tableau de contrôle, i.e. de l'appareil d'affichage, peuvent être des images en noir et blanc, ou en niveau de gris, et les étapes de comparaison sont réalisées sur ces images en noir et blanc, ou en niveau de gris. Cet exemple de réalisation présente l'avantage de faciliter la comparaison des images avec peu de ressources.

Bien entendu, alternativement, les images peuvent également être prises en couleur et les étapes de comparaison peuvent être réalisées sur les images en couleur. Cet exemple de réalisation présente l'avantage d'accéder à davantage d'informations sur les images, mais nécessite plus de ressources et de temps de traitement.

La phase d'analyse peut être réitérée à une fréquence prédéterminée, par exemple toutes les secondes.

Selon un autre aspect de l'invention, il est proposé un dispositif pour déterminer au moins un itinéraire ferroviaire, en particulier configuré pour mettre en oeuvre le procédé selon l'invention, le dispositif comprenant :
- au moins un moyen d'acquisition d'une image, dite actuelle, d'un appareil d'affichage lumineux des itinéraires ferroviaires utilisés à un instant donné,
- au moins un moyen de traitement d'image configuré pour :
- comparer ladite image actuelle avec une image, dite précédente, dudit appareil d'affichage précédemment acquise ; et
- déterminer, en fonction de ladite comparaison, au moins un itinéraire ferroviaire.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un exemple non limitatif d'un procédé selon l'invention ;
- la FIGURE 2 est une représentation schématique d'une phase d'apprentissage pouvant être mise en oeuvre dans le procédé selon l'invention ; et
- la FIGURE 3 est une représentation schématique d'un dispositif selon l'invention ;

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

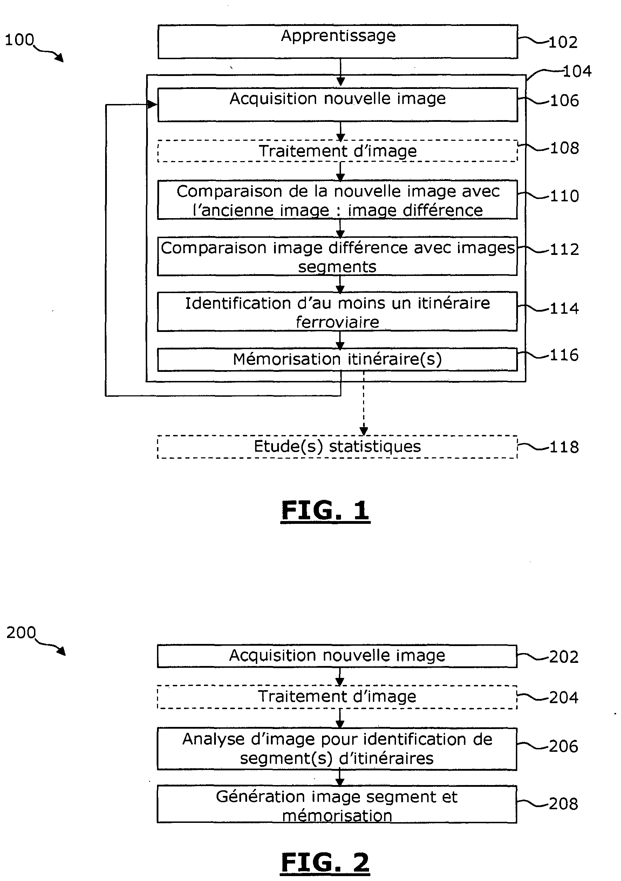

La FIGURE 1 est une représentation schématique d'un exemple non limitatif d'un procédé selon l'invention.

Le procédé selon l'invention comprend une phase 102 d'apprentissage permettant de déterminer de manière individualisée une image de chaque segment d'itinéraire pouvant être affiché sur un écran ou tableau de contrôle.

Suite à la phase d'apprentissage, le procédé selon l'invention comprend au moins une itération d'une phase 104 dite d'analyse pour déterminer une image d'au moins un, en particulier chaque, itinéraire ferroviaire affiché sur le tableau de contrôle.

Pour ce faire, la phase d'analyse 104 comprend une étape 106 d'acquisition d'une nouvelle image. Dans l'exemple de réalisation décrit ici, toutes les images sont en noir et blanc ou en niveaux de gris.

Lors d'une étape 108 optionnelle, la nouvelle image acquise subit un traitement d'image, par exemple pour augmenter la luminosité, le contraste etc.

Lors d'une étape 110, la nouvelle image est comparée à une image précédente, acquise lors d'une itération précédente de la phase 104 d'analyse, pour déterminer la différence entre cette nouvelle image et l'image précédente. Cette étape 110 fournit une image comprenant uniquement les différences entre la nouvelle image et l'image précédente. La comparaison de la nouvelle image avec la précédente image est réalisée pixel par pixel.

Lors d'une étape 112, l'image de différence est comparée à l'image de chacun des segments d'itinéraires déterminés lors de la phase d'apprentissage 102, en utilisant l'opérateur booléen « ET ». Cette comparaison est réalisée pixel par pixel. Lorsqu'un segment d'itinéraire est présent sur l'image d'itinéraire, une donnée d'identification de ce segment est mémorisée. Cette étape 112 est réalisée au tant de fois qu'il y a d'images segments.

En fonction des identifiants de segments mémorisés lors de l'étape 112, une étape 114 détermine le ou les itinéraires affichés sur le tableau de contrôle.

Chaque itinéraire identifié lors de l'étape 114 est mémorisé dans une base de données lors d'une étape 116, éventuellement en association avec une donnée horaire indiquant la date et l'heure à laquelle cet itinéraire est affiché sur le tableau de contrôle.

L'étape 116 de mémorisation réalise également une mémorisation de la nouvelle image pour une utilisation de ladite nouvelle image comme image précédente lors d'une prochaine itération de la phase d'analyse 104.

Les étapes 106 à 116 composant la phase d'analyse 104 sont réalisées à une fréquence prédéterminée, par exemple toutes les secondes.

Le procédé 100 représenté sur la FIGURE 1 peut en outre comprendre une phase d'analyse 118, réalisée sur demande, qui permet de déterminer par étude statistique au moins un paramètre relatif à l'utilisation d'un itinéraire ferroviaire, tel que par exemple :
- une fréquence d'utilisation de l'itinéraire, éventuellement pour une plage horaire prédéterminée,
- au moins un instant d'utilisation dudit itinéraire,
- au moins un itinéraire adjacent sur au moins une partie dudit itinéraire utilisé au même moment que ledit itinéraire, et
- au moins un, en particulier chaque, équipement ferroviaire concerné par ledit itinéraire.

La FIGURE 2 est une représentation schématique d'un exemple d'une phase d'apprentissage pouvant être mise en oeuvre dans le procédé selon l'invention, tel que procédé 100 de la FIGURE 1.

La phase d'apprentissage 200 comprend une étape 202 d'acquisition d'une image du tableau de contrôle.

Lors d'une étape optionnelle 204, l'image acquise est traitée par exemple pour augmenter la luminosité de l'image, le contraste de l'image, etc.

Puis, lors d'une étape 206, l'image du tableau de contrôle est analysée pour détecter, sur le tableau de contrôle des voyants, tels que par exemple des voyants de transit ou des regroupements de voyants de transit, des voyants d'aiguille, etc. signalant le début, la fin d'un segment ou un croisement de segments etc. En fonction de la position des voyants et de leur état de fonctionnement, à savoir la couleur affichée et le type d'affichage (affichage continue ou affichage clignotant), chaque segment individuel est identifié.

Lorsqu'un segment individuel est identifié, une étape 208 génère une image du segment, contenant uniquement le segment en question, par exemple sur un fond uni, tel qu'un fond noir. L'image du segment est mémorisée, éventuellement en association avec au moins un équipement ferroviaire associé audit segment, par exemple au début du segment, ou à la fin du segment. Un tel équipement peut par exemple être un dispositif d'aiguillage dont une donnée d'identification est affichée sur le tableau de contrôle en début ou à la fin du segment.

L'image d'au moins un, en particulier chaque segment, peut être une image du tableau de contrôle, avec un fond noir et affichant uniquement le segment, avec une couleur blanche.

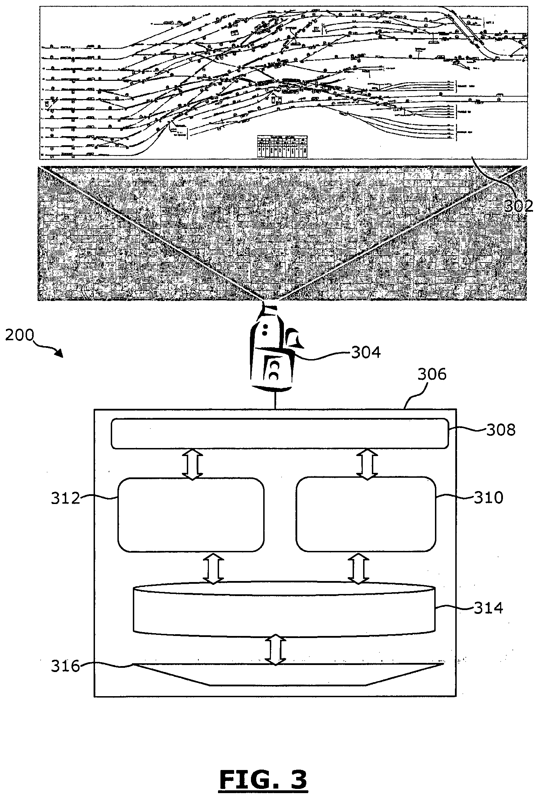

La FIGURE 3 est une représentation schématique d'un exemple non limitatif d'un dispositif selon l'invention.

Le dispositif 300 représenté sur la FIGURE 3 permet de déterminer des itinéraires affichés sur un tableau de contrôle 302.

Pour ce faire, le dispositif 300 comprend un moyen 304 d'acquisition d'image, tel que par exemple une webcam ou une caméra, pour acquérir des images d'un tableau de contrôle 302.

Le dispositif 300 comprend un module de gestion 306 qui comprend :
- un module 308 de traitement de chaque image acquise par la caméra 304 pour augmenter la luminosité de l'image, le contraste de l'image, etc. ;
- un module 310 d'apprentissage réalisant la détection et la génération d'une image de chaque segment d'itinéraire, par exemple par la mise en oeuvre des étapes décrites en référence à la FIGURE 2 ;

- un module 312 d'analyse réalisant la détection de chaque itinéraire affiché sur le tableau de contrôle, par exemple par la mise en oeuvre des étapes décrites en référence à la FIGURE 1 ;
- une base de données 314 pour mémoriser chaque image prise par la caméra 304, chaque image de segment générée par le module d'apprentissage et les données relatives à chaque itinéraire ferroviaire fournies par le module d'analyse ; et
- un module 316 d'analyse statistique pour déterminer au moins des paramètres, listés plus haut, relatifs à l'utilisation de chaque itinéraire ferroviaire.

Chaque module peut être un module électrique et/ou informatique, tel qu'un processeur, ou un circuit intégré ou une puce électronique comprenant les instructions pour mettre en oeuvre la ou les fonctions précisées.

Bien entendu l'invention n'est pas limitée aux exemples qui viennent d'être décrits.

## Revendications

1. Procédé (100) pour déterminer au moins un itinéraire ferroviaire affiché sur un appareil d'affichage lumineux (302), ledit procédé (100) comprenant plusieurs itérations d'une phase (104) d'analyse comprenant les étapes suivantes :
- acquisition (106) d'une image, dite actuelle, dudit appareil d'affichage lumineux (302),
- comparaison (110) de ladite image actuelle avec une image, dite précédente, dudit appareil d'affichage (302) acquise lors d'une itération précédente ; et
- détermination (112,114), en fonction de ladite comparaison, d'au moins un itinéraire ferroviaire.

2. Procédé (100) selon la revendication précédente, **caractérisé en ce que** l'étape de comparaison (110) fournit une image, dite de différence, dudit appareil d'affichage (302) comprenant les différences entre l'image actuelle et l'image précédente.

3. Procédé (100) selon l'une quelconque des revendications précédentes, **caractérisé en ce qu'**il comprend en outre au moins une itération d'une phase (102,200), dite d'apprentissage, comprenant les étapes suivantes :
- acquisition (202) d'une image de l'appareil d'affichage (302),
- analyse (206) de ladite image pour détecter au moins un, en particulier chaque, segment composant au moins un itinéraire ;
ladite phase d'apprentissage (102,200) fournissant pour au moins un, en particulier chaque, itinéraire une image d'au moins un, en particulier chaque, segment dudit itinéraire de manière isolée sur l'appareil d'affichage (302).

4. Procédé (100) selon les revendications 2 ou 3, **caractérisé en ce que** l'étape de détermination d'au moins un itinéraire comprend une étape (112) de comparaison de l'image de différence avec l'image d'au moins un, en particulier de chaque, segment pour déterminer si l'image de différence comprend ledit segment.

5. Procédé (100) selon l'une quelconque des revendications précédentes, **caractérisé en ce qu'**une comparaison de deux images est réalisée pixel par pixel.

6. Procédé (100) selon l'une quelconque des revendications précédentes, **caractérisé en ce qu'**il comprend en outre une étape (116) de mémorisation d'au moins un itinéraire dans une base de données.

7. Procédé (100) selon la revendication précédente, **caractérisé en ce qu'**il comprend une étape (118) d'analyse des données d'itinéraire mémorisées pour déterminer au moins une caractéristique relative à une utilisation d'un itinéraire, ladite caractéristique comprenant :
- une fréquence d'utilisation dudit itinéraire, éventuellement pour une plage horaire,
- au moins un instant d'utilisation dudit itinéraire,
- au moins un itinéraire adjacent sur au moins une partie dudit itinéraire utilisé au même moment que ledit itinéraire,
- au moins un, en particulier chaque, équipement ferroviaire concerné par ledit itinéraire, et
- au moins un élément de l'itinéraire

8. Procédé (100) selon l'une quelconque des revendications précédentes, **caractérisé en ce qu'**il comprend une étape (108,204) de traitement de l'image acquise pour améliorer la luminosité de ladite image.

9. Procédé (100) selon l'une quelconque des revendications précédentes, **caractérisé en ce que** la phase d'analyse (104) comprend une mémorisation (116) de l'image actuelle pour l'utiliser lors d'une prochaine itération.

10. Dispositif (300) pour déterminer au moins un itinéraire ferroviaire, en particulier configuré pour mettre en oeuvre le procédé selon l'une quelconque des revendications précédentes comprenant :
- au moins un moyen (304) d'acquisition d'une image, dite actuelle, d'un appareil d'affichage lumineux (302) des itinéraires ferroviaires utilisés à un instant donné,
- au moins un moyen (306-312) de traitement d'image configuré pour :
- comparer ladite image actuelle avec une image, dite précédente, dudit appareil d'affichage (302) précédemment acquise ; et
- déterminer, en fonction de ladite comparaison, au moins un itinéraire ferroviaire.

## Patentansprüche

1. Verfahren (100) zum Bestimmen mindestens einer Eisenbahnstrecke, die auf einem Leuchtanzeigegerät (302) angezeigt wird, wobei das Verfahren (100) mehrere Wiederholungen einer Analysephase (104) umfasst, umfassend die folgenden Schritte:
- Erfassen (106) eines sogenannten aktuellen Bildes des Leuchtanzeigegeräts (302),
- Vergleichen (110) des aktuellen Bildes mit einem sogenannten vorangehenden Bild des Anzeigegeräts (302), welches bei einer vorangehenden Wiederholung erfasst wurde, und
- Bestimmen (112,114), in Abhängigkeit von dem Vergleich, mindestens einer Eisenbahnstrecke.

2. Verfahren (100) nach vorangehendem Anspruch, **dadurch gekennzeichnet, dass** der Vergleichsschritt (110) ein sogenanntes Unterschiedsbild des Anzeigegeräts (302) bereitstellt, welches die Unterschiede zwischen dem aktuellen Bild und dem vorangehenden Bild umfasst.

3. Verfahren (100) nach einem der vorangehenden Ansprüche, **dadurch gekennzeichnet, dass** es ferner mindestens eine Wiederholung einer sogenannten Lernphase (102,200) umfasst, umfassend die folgenden Schritte:
- Erfassen (202) eines Bildes des Anzeigegeräts (302);
- Analysieren (206) des Bildes, um mindestens ein, insbesondere jedes Segment zu ermitteln, das mindestens eine Strecke bildet;
wobei die Lernphase (102, 200) für mindestens eine, insbesondere jede Strecke ein Bild mindestens eines, insbesondere jedes Segments der Strecke auf dem Anzeigegerät (302) isoliert bereitstellt.

4. Verfahren (100) nach den Ansprüchen 2 oder 3, **dadurch gekennzeichnet, dass** der Bestimmungsschritt mindestens einer Strecke einen Vergleichsschritt (112) des Unterschiedsbildes mit dem Bild mindestens eines, insbesondere jedes Segments umfasst, um zu bestimmen, ob das Unterschiedsbild das Segment umfasst.

5. Verfahren (100) nach einem der vorangehenden Ansprüche, **dadurch gekennzeichnet, dass** ein Vergleich von zwei Bildern Pixel um Pixel durchgeführt wird.

6. Verfahren (100) nach einem der vorangehenden Ansprüche, **dadurch gekennzeichnet, dass** es ferner einen Speicherschritt (116) mindestens einer Strecke in einer Datenbank umfasst.

7. Verfahren (100) nach vorangehendem Anspruch, **dadurch gekennzeichnet, dass** es einen Analyseschritt (118) der gespeicherten Streckendaten umfasst, um mindestens ein Merkmal zu bestimmen, das sich auf eine Benutzung einer Strecke bezieht, wobei das Merkmal umfasst:
- eine Benutzungshäufigkeit der Strecke, eventuell für einen Zeitabschnitt,
- mindestens einen Benutzungsmoment der Strecke,
- mindestens eine über mindestens einen Teil der Strecke, die zum gleichen Moment wie die Strecke benutzt wird, benachbarte Strecke,
- mindestens eine, insbesondere jede, Eisenbahnanlage, die von der Strecke betroffen ist, und
- mindestens ein Element der Strecke.

8. Verfahren (100) nach einem der vorangehenden Ansprüche, **dadurch gekennzeichnet, dass** es einen Verarbeitungsschritt (108, 204) des erfassten Bildes umfasst, um die Lichtstärke des Bildes zu verbessern.

9. Verfahren (100) nach einem der vorangehenden Ansprüche, **dadurch gekennzeichnet, dass** die Analysephase (104) ein Speichern (116) des aktuellen Bildes umfasst, um es bei einer nächsten Wiederholung zu verwenden.

10. Vorrichtung (300) zum Bestimmen mindestens einer Eisenbahnstrecke, die insbesondere konfiguriert ist, um das Verfahren nach einem der vorangehenden Ansprüche durchzuführen, umfassend:
- mindestens ein Erfassungsmittel (304) eines sogenannten aktuellen Bildes eines Leuchtanzeigegeräts (302) der zu einem bestimmten Moment benutzten Eisenbahnstrecken,
- mindestens ein Bildverarbeitungsmittel (306-312), das konfiguriert ist, um:
- das aktuelle Bild mit einem sogenannten vorangehenden, zuvor erfassten Bild des Anzeigegeräts (302) zu vergleichen, und
- in Abhängigkeit von dem Vergleich mindestens eine Eisenbahnstrecke zu bestimmen.

## Claims

1. A method (100) for determining at least one railway route displayed on a luminous display device (302), said method (100) comprising a plurality of iterations of an analysis phase (104) comprising the steps of:
- acquisition (106) of a so-called current image of said light display device (302),
- comparison (110) of said current image with a so-called previous image from said display device (302) acquired during a previous iteration; and
- determination (112, 114), as a function of said comparison, of at least one railway route.

2. A method (100) according to the preceding claim, **characterized in that** the comparison step (110) provides a so-called difference image from said display device (302) comprising the differences between the current image and the previous picture.

3. A method (100) according to any one of the preceding claims, **characterized in that** it further comprises at least one iteration of a phase (102,200), called learning, comprising the following steps:
- acquisition (202) of an image of the display device (302),
- analysis (206) of said image to detect at least one, in particular each, segment making up at least one route;
said learning phase (102,200) providing for at least one, in particular each, route an image of at least one, in particular each, segment of said route, in isolation, on the display device (302).

4. A method (100) according to claims 2 or 3, **characterized in that** the step of determination of at least one route comprises a step (112) for comparison of the difference image with the image of at least one, in particular each, segment to determine whether the difference image comprises said segment.

5. A method (100) according to any one of the preceding claims, **characterized in that** a comparison of two images is performed pixel by pixel.

6. A method (100) according to any one of the preceding claims, **characterized in that** it further comprises a step (116) for storing at least one route in a database.

7. A method (100) according to the preceding claim, **characterized in that** it comprises a step (118) for analysis of the stored route data to determine at least one feature relating to a use of a route, said feature comprising:
- a frequency of use of said route, possibly for a time slot,
- at least one instance of use of said route,
- at least one adjacent route on at least a portion of said route used at the same time as said route,
- at least one, in particular each railway equipment concerned by the said route, and
- at least one element of the route

8. A method (100) according to any one of the preceding claims, **characterized in that** it comprises a step (108,204) for processing the acquired image to improve the brightness of said image.

9. A method (100) according to any one of the preceding claims, **characterized in that** the analysis phase (104) comprises a storage (116) of the current image for its use in an upcoming iteration.

10. A device (300) for determining at least one railway route, in particular configured to implement the method of any one of the preceding claims comprising:
- at least one means (304) for acquisition of a so-called current image of a luminous display device (302) of the railway routes used at a given moment,
- at least one means (306-312) of image processing configured to:
- compare said current image with a so-called previous image of said previously acquired display device (302); and
- determine, as a function of said comparison, at least a railway route.
